# EUROPÄISCHE PATENTSCHRIFT

(11) **EP 1 789 272 B1**
(45) Veröffentlichungstag und Bekanntmachung des Hinweises auf die Patenterteilung: **22.04.2009**
(21) Anmeldenummer: 05777018.2
(22) Anmeldetag: 10.08.2005
(51) Int. Cl.: B60H 1/00

(54) **BELÜFTUNGSVORRICHTUNG UND HERSTELLVERFAHREN FÜR EINE BELÜFTUNGSVORRICHTUNG**
VENTILATION DEVICE AND METHOD FOR THE PRODUCTION OF A VENTILATION DEVICE
DISPOSITIF D'AERATION ET PROCEDE DE REALISATION

(30) Priorität: 13.08.2004 DE 102004039442
(43) Veröffentlichungstag der Anmeldung: 30.05.2007
(73) Patentinhaber: Behr GmbH & Co. KG, 70469 Stuttgart (DE)
(72) Erfinder: DIEKSANDER, Wolfgang, 71711 Steinheim/Murr (DE); HÖRIG, Harald, 76476 Bischweier (DE)
(74) Vertreter: Wallinger, Michael
(86) Internationale Anmeldenummer: PCT/EP2005/008693
(87) Internationale Veröffentlichungsnummer: WO 2006/018209

(56) Entgegenhaltungen:
- EP-A- 0 940 275
- DE-A1- 4 309 356
- DE-U1- 29 709 768
- US-A1- 2003 232 591
- PATENT ABSTRACTS OF JAPAN Bd. 1998, Nr. 08, 30. Juni 1998 (1998-06-30) & JP 10 058951 A (DENSO CORP), 3. März 1998 (1998-03-03)

## Beschreibung

Die Erfindung betrifft eine Belüftungsvorrichtungm gamäß den Obertegriffen der Ansprüchs 1 und 12 sowie ein Heretellverfahren für eine derartige Belüftungsvorrichtung gemäß dem Oberbegriff von Anspruch 21. Belüftungsvorrichtungen zum Temperieren, insbesondere zum Brwärmen und Kühlen, von Luft, welche in einen Fahrgastraum eines Kraftfahrzeuges geleitet wird, und/oder zum Belüftet von Fahrgasträumen sind im Stand der Technik bekannt.

Diese Belüftungsvorrichtungen weisen üblicherweise ein Gehäuse auf, welches von einem durch einen Lufteinlass in das Gehäuse eintretenden und einem durch einen Luftauslass aus dem Gehäuse austretenden Luftstrom durchströmt wird. In dem Gehäuse sind Strömungakanäle bildende Strömungselemente, wie Klappen, Kanäle oder Bleche, und Mittel zum Temperieren und Mischen von Lüftströmen angeordnet.

An den Luftein- und Luftausläseen sind Lüftungskanäle bzw. Kanalabgänge angeordnet, welche von den ein- und austretenden Lüftströmen durchströmt werden. An die Lüftungakanäle schließen meist weitere Strömungselemente, wie Düsen oder Anschlusskanäle, gekoppelt über Auflageflansche oder -stutzen an, wodurch die strömungswege zu einem gewünschten Belüftungsort geführt werden können.

Diese Belüftungsvorrichtungen weisen jedoch den Nachteil auf, dass sie aus starren Elementen, insbesondere starren Gehäuseteilen und Kanalabgängen, aufgebaut sind, welche keine funktionellen und/oder strukturellen Vorkehrungen zu einem vorbestimmten Energieabbau bei Belastung aufweisen.

Treffen auf diese starren Elemente, beispielsweise ausgelöst durch einen Crash eines Kraftfahrzeugs, andere, insbesondere verformungssteife, Elemente, wie Cockpit-Teile, zum Beispiel ein Radio, ein Bildschirm, ein Heizungs-Klimabediengerät oder Lüftaustrittsdüsen, auf, so erfolgt ein unkontrollierter Energieabbau über einen, insbesondere bei kompakten Bauweisen wie im Kraftfahrzeugbereich, kurzen Verformungsweg der betroffenen starren Elemente. Der kurze Verformungsweg ist hierbei insbesondere durch die Starrheit der Elemente bedingt.

Eine Verletzungsgefahr für Insassen eines solchen Kraftfahrzeugs, beispielsweise bei einem Kopfaufschlag, ist erhöht.

EP-0 940 275 A offenbart eine gattungsgemäße Belüftungsvorrichtung sowie ein Verfahren zur Herstellung derselben. Die gattungsgemäßen Belüftungsvorrichtung hat an einer vorgebbaren Stelle der Belüftungsvorrichtung einen Bereich, welcher unter einer vorgegebenen Belastung nach einer durch eine Struktur der Belüftungsvorrichtung in dem Bereich vorbestimmten Weise seine Gestalt ändert, wobei bei der Gestaltänderung eine durch die Belastung bewirkte Umformungsenergie abgebaut wird.

Weitere Belüftungsvorrichtungen sind bekannt aus DE 43 09 356 A1; US-2003/232591 A1; DE 297 09 768 Ul und JP-10-058951 A.

Es ist die Aufgabe der vorliegenden Erfindung, eine Belüftungsvorrichtung sowie ein Verfahren zur Herstellung derselben vorzusehen, die eine kontrollierte Gestaltänderung des Bereiches ermöglichen.

Diese Aufgabe wird jeweils durch die Belüftungsvorrichtungen mit den Merkmalen der Ansprüche 1 und 12 und durch das Verfahren mit den Merkmalen des Anspruchs 21 gelöst. Vorteilhafte Weiterbildungen der Erfindung sind in den abhängigen Ansprüchen definiert.

Die erfindungegemäße Belüftungsvorrichtung, insbesondere für Kraftfahrzeuge, weist an einer vorgebbaren stelle der Belauftungsvorrichtung einen Bereich auf, welcher unter einer vorgegebenen Belastung nach einer durch eine Struktur der Belüftungsvorrichtung in dem Bereich vorbestimmten Weise seine Gestalt ändert.

Bei der Gestaltänderung wird eine durch die Belastung bewirkte Umformungsenergie abgebaut.

Bei dem erfindungsgemäßen Herstellverfahren für die Belüftungsvorrichtung wird eine vorgebbare Stelle der Belüftungseinrichtung derart bearbeitet, dass ein Bereich gebildet wird, der unter einer vorgegebenen Belastung nach einer durch eine Struktur der Belüftungsvorrichtung in dem Bereich vorbestimmten Weise seine Gestalt ändert.

Dabei wird unter "nach einer durch eine Struktur vorbestimmten Weise" verstanden, dass die Struktur der Belüftungsvorrichtung in dem Bereich derart gezielt angepasst ist, dass dort bei Belastung eine bewusst herbeigeführte, d.h. definierte, und nicht unkontrollierte Gestaltänderung bewirkt wird.

Dadurch wird durch die Erfindung in vorteilhafter Weise erreicht, dass die Umformungsenergie, im weiteren auch bezeichnet als Verformungs- oder Deformationsenergie, strukturbedingt definiert, insbesondere über einen durch die Gestaltänderung bei der belasteten Belüftungsvorrichtung bewirkten größeren Verformungsweg abgebaut wird.

Anschaulich gesehen wird somit die Umformungsenergie definiert abgebaut, wobei gezielt die Belüftungsvorrichtung bzw. deren Volumen, insbesondere als verlängerter Verformungsweg, mitgenutzt wird.

In weiterer vorteilhafter Weise wird durch die Erfindung erreicht, dass durch den definierten Energieabbau über den größeren Verformungsweg ein Verletzungsrisiko von Insassen eines Kraftfahrzeugs bei einem Crash vermindert werden kann.

Die Belüftungsvorrichtung, beispielsweise eine Lüftungsanlage, eine Heizungsanlage oder eine Klimaanlage in einem Kraftfahrzeug, weist gemäß einer besonders bevorzugten Ausführungsform mindestens ein Gehäuse mit einer Gehäusewand und mit einem Lüftungskanal, welcher an einer Strömungsöffnung des Gehäuses angeordnet ist, auf.

Weiter kann die Belüftungsvorrichtung vorzugsweise ein Anschlusselement, insbesondere einen Anschlusskanalstutzen oder eine Düse, welches insbesondere mit dem Lüftungskanal verbunden ist, aufweisen.

Als vorgebbare Stelle sind insbesondere die vorgenannten Elemente der Belüftungsvorrichtung geeignet. So kann als die vorgebbare Stelle bevorzugt das Gehäuse, hier insbesondere eine Gehäusewand, im speziellen eine Außenwand des Gehäuses, oder das Anschlusselement oder ein Verbindungsbereich zwischen dem Gehäuse und dem Anschlusselement vorgesehen sein.

Auch kann die vorgebbare Stelle der Lüftungskanal, insbesondere ein Kanalstutzen mit einem Auflagenflansch oder Kragen, oder ein Verbindungsbereich zwischen dem Lüftungskanal und dem Anschlusselement sein.

Der für die Gestaltänderung vorgesehene Bereich kann beliebig ausgestaltet sein. Bevorzugt ist der Bereich als Punkt oder Linie oder verschieden dimensionierte 2- oder 3-dimensionale Fläche oder Körper, insbesondere als ein annähernd zylinderförmiger Körper, ausgestaltet.

Gemäß einer besonders bevorzugten Ausführungsform ist die Struktur eine eine Sollbruchstelle bildende Schwächung am Gehäuse. Diese Schwächung kann punktförmig, linienförmig oder verschieden dimensioniert flächig ausgestaltet sein.

Besonders bevorzugt ist die Struktur eine eine Sollbruchstelle bildende Kerbe, insbesondere in der Gehäusewand oder dem Lüftungskanal oder dem Anschlusselement. Diese kann linienförmig oder ein offener oder geschlossener Polygonzug sein, beispielsweise C-/T- oder X-förmig, - oder eine Kombination derselben. Auch kann sie, insbesondere bei Rohren, zylinderförmigen Körpern oder ähnlichen 3-dimensionelen Körpern, umlaufend sein.

Weiter bevorzugt kann die Struktur, insbesondere an oben genannten Vorrichtungsteilen, auch eine Wandverdünnung, eine Gebäuseunterbrechung oder eine Gehäuseöffnung oder Kombinationen derselben sein.

Gehäuseunterbrechungen können beispielsweise unterbrochene Rippenstrukturen mit verschieden geformten bzw. verlaufenden Rippen oder mit im Allgemeinen hervorstehende, dünnwandige Erhebungen sein, welche dann auch als Träger von Dichtungen für den Anschluss von Anschlussteilen verwendet werden können.

Diese unterbrochenen Rippenstrukturen können beispielsweise mit X-/T- oder C-förmigen Rippen - oder Kombinationen davon - ausgebildet sein. Unterbrochen kann dabei heißen, dass einzelne Rippen untereinander nicht verbunden sind, d.h. Unterbrechungen aufweisen, oder Rippen Unterbrechungen zu Rändern aufweisen. Solche unterbrochenen Rippenstrukturen wirken dann strukturschwächend. Diese können weiter ergänzt werden durch Kerben, welche zwischen den Rippen angeordnet sind.

In einer alternativen Ausführungsform ist die Struktur eine eine Relativbewegung, insbesondere eine Längsverschiebung, ermöglichende Kopplung, insbesondere zwischen dem Lüftungskanal und dem Anschlusselement.

Diese Kopplung kann unter Verwendung eines in einer an einer Innenwand des Anschlusselements und/oder an einer Außenwand des Lüftungskanal umlaufenden Nut eingelegten Ringes bewirkt werden.

Die bei der Kopplung ermöglichte Relativbewegung kann einen Längenausgleich bewirken, bevorzugt derart, dass der Lüftungskanal in Längsrichtung teleskopartig gegen das Anschlusselement verschoben wird.

Bei den Belüftungsvorrichtungen kann natürlich vorgesehen sein, beliebige Kombinationen obiger Strukturen miteinander zu kombinieren. So können beispielsweise Rippen, im speziellen C-/T-oder X-förmige Rippen, mit Schlitzen, im speziellen C-/T- oder X-förmige Schlitze, kombiniert werden. Auch können Kerben, im speziellen umlaufende Kerben, mit Rippen, insbesondere C-/T-oder X-förmige Rippen, kombiniert werden. Auch können Schlitze, insbesondere C-/T- oder X-förmige Schlitze, mit Kerben, insbesondere kerbenartigen Verbindungen zwischen Schlitzen, kombiniert werden.

Solche kombinierten Strukturen können Träger von Dichtungen sein.

Zusätzlich können dann noch die Längsverschiebung ermöglichenden Kopplungen mitkombiniert sein.

Besonders bevorzugt ist die vorbestimmte Weise der Gestaltänderung ein Bruch, eine Verformung, ein Abscheren, eine Verschiebung und/oder eine Relativbewegung zwischen Elementen der Belüftungsvorrichtung.

Bevorzugt ist die Struktur an die vorgegebene Belastung angepasst, d.h. hier kann vorgesehen werden, dass nur bei bestimmten Belastungsrichtungen bzw. Richtungsanteilen und/oder bei bestimmten Belastungshöhen bzw. bei deren Überschreiten eine Gestaltänderung der Struktur bewirkt wird.

Diese Anpassung kann beispielsweise durch entsprechende Abmessungen, wie Kerbentiefen Rippendicken, -höhen, Sollbruchstellenverläufe oder Schlitzbreiten, und ähnlichem realisiert sein.

Dadurch können ungewollte und unkontrollierte Gestaltänderungen vermieden werden.

Die vorgegebene Belastung kann durch auf die Belüftungsvorrichtung auftreffende Elemente, insbesondere Cockpit-Teile, bewirkt werden. Solches Auftreffen von Elementen kann durch einen Crash ausgelöst bzw. bewirkt werden.

Die Erfindung und weitere Vorteile werden nachfolgend in mehreren Ausführungsbeispielen erläutert, wobei eine Beschränkung der Erfindung hierdurch nicht erfolgen soll.

### Es zeigen:

- Fig. 1: eine schematische Darstellung eines Gehäuses einer Kraftfahrzeug-Klimaanlage mit einer eine Sollbruchstelle bildenden Schwächung am Gehäuse gemäß einem Vergleinleiopiel;
- Fig. 2: eine schematische Darstellung einer Gehäusewand mit einer eine Sollbruchetelle bildenden Schwächung gemäß Vergleinleiopiel;
- Fig. 3: eine Schnittdarstellung eines Kanaletutzens mit einem Auflageflansch, welcher eine Sollbruchstelle aufweist, gemäß einem Ausführungsbeispiel;
- Fig. 4: eine schematische Darstellung eines Auflageflanschea eines Kanalstutzens, welcher definierte Unterbrechungen zur Ausbildung von sollbruchstellen aufweist, gemäß einem Ausführungsbeispiel;
- Figuren: 5a bis d schematischen Darstellungen eines Auflageflansches eines Kanalstutzens, welcher eine Sollbruchstelle aufweist, gemäß einem Auaführungsbeispiel;
- Fig. 6: eine schematische Darstellung ineinanderverschieblicher Rohre, durch welche ein (verlängerter) Verformungsweg durch Längenausgleich gebildet wird, gemäß einem Ausführungebeispiel;
- Figuren: 7a bis b schematische Darstellungen von Sollbruchstellen bildenden Strukturen an einer Auflagefläche eines Anschlussflansches, wie er nach Fig. 4 ausgebildet sein kann, gemäß Ausführungsbeispielen.
- Figuren: 8a bis b schematische Darstellungen einer Sollbruchstellen bildenden Struktur an einer Auflagefläche eines Anschlussflansches, wie er nach Fig. 4 ausgebildet sein kann, gemäß einem Ausführungsbeispiel;

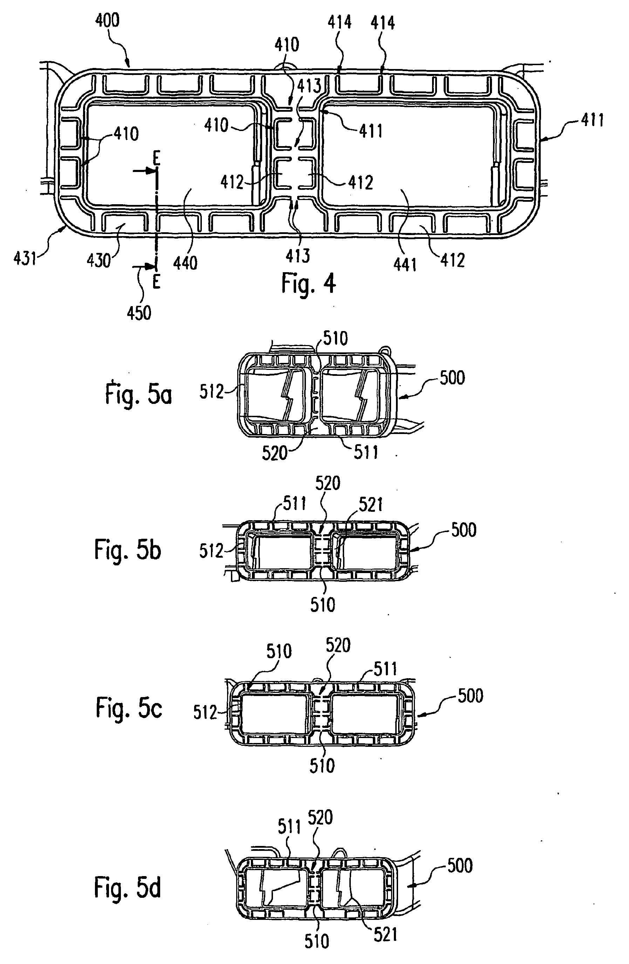

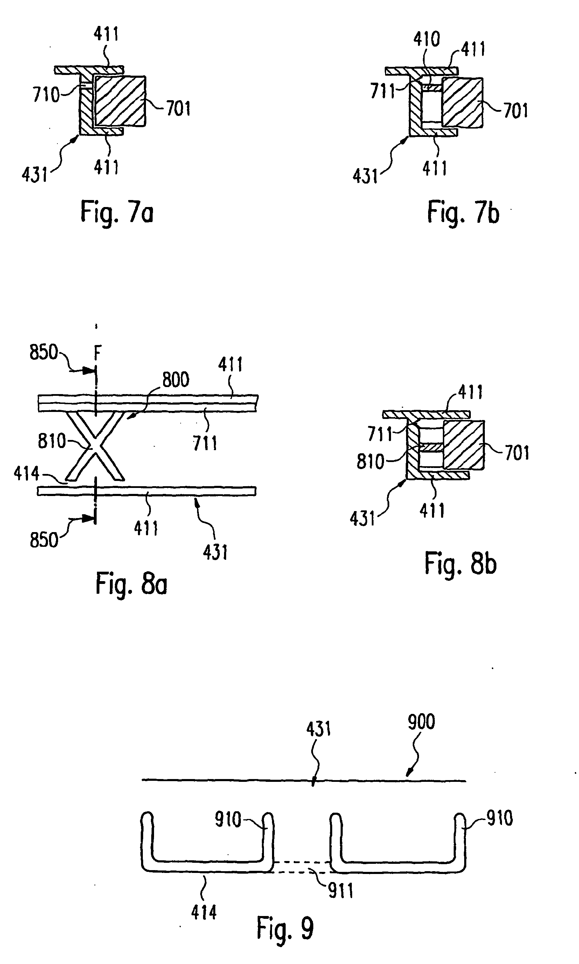

- Figur 9: schematische Darstellung einer Sollbruchtellen bildenden Struktur an einer Auflagefläche eines Anschlussflansches, wie er nach Fig. 4 aus gebildet sein kann, gemäß einem Ausführungsbeispiel.

**Erstes Verleichsbeispiel Definierte Schwächung am Gehäuse einer Kraftfahrzeugklimaanlage**

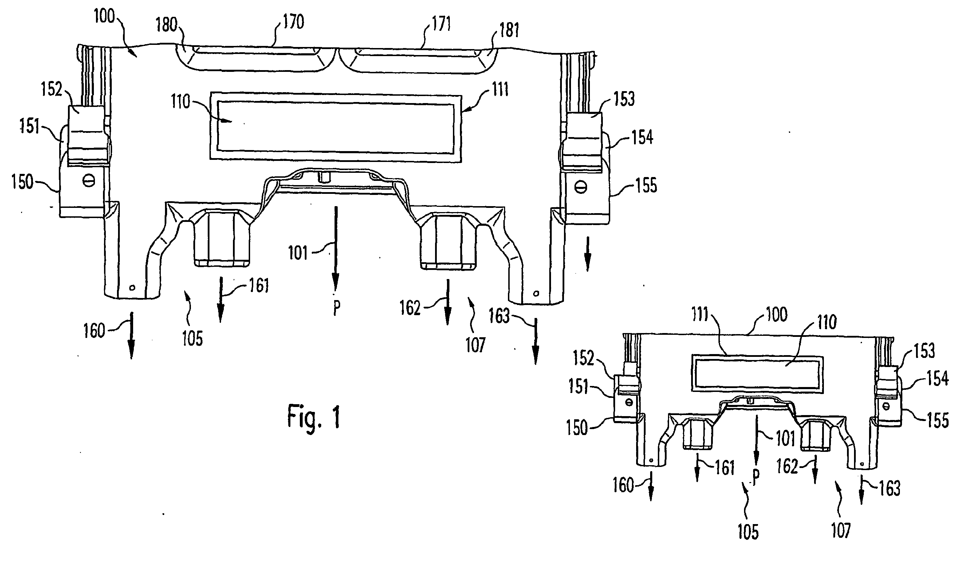

Fig. 1 zeigt das Gehäuse 100 einer Kraftfahrzeug-Klimaanlage, welches in Pfeilrichtung P 101 in einem Fahrzeugtunnel 105 aufliegt. Beiderseits des Gehäuses 100 sind Luftauslasskanäle 150 bis 155 zur Belüftung eines Fußraums einer Fahrgastzelle eines Kraftfahrzeugs sowie von Seitenbereichen der Fahrgastzelle angeordnet.

An der Unterseite 107 des Gehäuses 100 sind weitere Auslasskanäle 160 bis 163 zur weiteren Belüftung der Fahrgastzelle angeordnet.

Weiter weist das Gehäuse 100 der Kraftfahrzeug-Klimaanlage weitere Luftaustrittaöffnungen 170, 171 auf (nur teilweise sichtbar), an welchen Kanalstutzen mit Anschlussflanschen 180, 181 angeordnet sind.

Fig. 1 zeigt einen Bereich 110 des Gehäuses 100, welcher gleichsam eines Rahmens durch eine einen rechteckigen Polygonzug bildende, umlaufende 90°-Kerbe 111 umrandet wird. Diese 90°-Kerbe 111, in diesem Fall ausgebildet an einer äußeren Oberfläche der Gehäusewand, bildet eine definierte Schwächung am Gehäuse 100 der Kraftfahrzeug-Klimaanlage, d.h. eine Sollbruchstelle, aus.

Im Falle eines Unfalls des Kraftfahrzeugs (Crash) wird dieser Bereich 110, d.h. die Sollbruchstelle, bei Auftreffen von Cockpit-Teilen, wie Radio, Bildschirm, Heizungs-/Klimabediengerät usw., auf das Gehäuse 100 zu einer gezielt herbeigeführten Bruchstelle, d.h. das Gehäuse 100 bricht an dieser Stelle definiert und gezielt durch.

Die definierte Schwächung 110 am Gehäuse 100 bewirkt nämlich, dass dort nur geringe Bewegungsenergie - bzw. geringere Bewegungsenergie im Vergleich zu normalen ungeschwächten Gehäusebereichen - aufgewendet werden muss, um die Gehäusewand zu durchdringen bzw. diese zu durchbrechen.

Das Gehäuse 100 der Kraftfahrzeug-Klimaanlage ist dort definiert geschwächt und kann damit dort definiert brechen, d.h. im Allgemeinen sich dort definiert verformen.

Ein Verletzungsrisiko für Insassen eines derart verunfallten Kraftfahrzeugs wird dadurch reduziert.

Anzumerken ist, dass beliebig andere Formen von geschwächten Bereichen, beispielsweise runde, ovale, quadratische oder sternförmige Bereiche, durch einen entsprechenden Kerbenverlauf ausgebildet werden können.

Die Kerbe 111 kann an der äußeren Oberfläche, wie dargestellt in Figur 1, und/oder an der inneren Oberfläche einer Gehäusewand ausgebildet sein.

**Zweites Verglauhsbeispiel Definierte Schwächung einer Gehäusewand durch Kerbung**

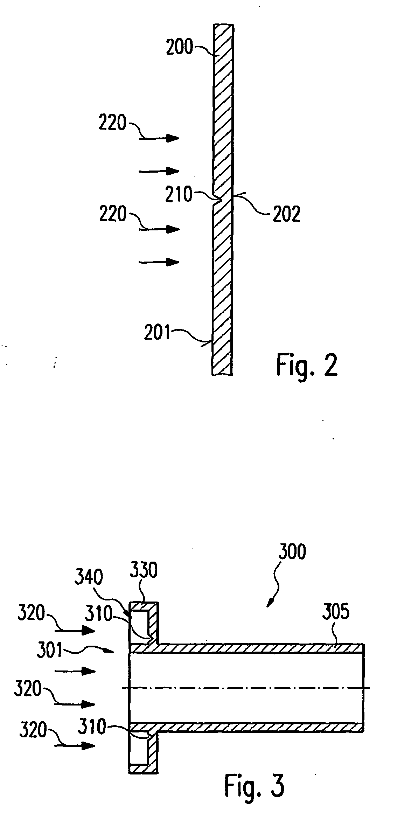

Fig. 2 zeigt einen Ausschnitt aus einer Gehäusewand 200, wie sie beispielsweise bei einem Klimaanlagengehäuse für ein Kraftfahrzeug auftreten kann.

An einer Oberfläche 201 der Gehäusewand 200 - dargestellt ist hier die nach außen weisende Oberfläche 201 einer Außenwand - ist eine eine Sollbruchstelle-bildende Kerbe 210 als definierte Schwächung an der Gehäusewand 200 ausgebildet.

Mit Pfeilen 220 ist eine Beschleunigungsrichtung von - im Bereich der durch die Kerbe 210 geschwächten Gehäusewand 200-auftreffenden Fahrzeugteilen, wie Cockpit-Teilen, verdeutlicht.

Treffen diese Teile, beispielsweise bei einem Crash eines Fahrzeugs, in Pfeilrichtung 220 im Bereich der Sollbruchstelle auf die Gehäusewand 200 - oder habe Bewegungsanteile in Pfeilrichtung 220 - bricht die Gehäusewand 200 an der durch die Kerbe 210 geschwächten Stelle definiert durch.

Kerbenform und Kerbentiefe sind dabei derart gewählt, dass es erst bei einer - nach Höhe und Richtung - bestimmten Krafteinwirkung zum Bruch kommt. Somit können ungewollte Durchbrüche an der Sollbruchstelle vermieden werden.

Anzumerken ist, dass die die Sollbruchstelle ausbildende Kerbe 210 anstelle der nach außen weisenden Wandoberfläche genauso an der gegenüberliegenden, nach innen zeigenden, Wandoberfläche 202 der Gehäusewand, 200 angeordnet sein kann.

**Erstes Ausführungsbeispiel: Anflageflansch eines Kanalstutxens mit definierter, eine Sollbruchstelle bildender gekerbter Wandschwächung**

Fig. 3 zeigt - im Längsschnitt - einen Kanalstutzen 300, welcher ein im wesentlichen rohrförmiges Bauteil mit einem Rohrabschnitt 305 ist. An einem Ende 301 des Kanalstutzens bzw. des Rohrabschnitts 305 ist ein Auflageflansch, auch bezeichnet als Kragen, 330 ausgebildet (vgl. Figuren 4, 5 a bis d). In einem Übergangsbereich des Flansches 330 an den Rohrabschnitt 305 ist eine umlaufende Kerbe 310 eingearbeitet.

Diese Kerbe 310 bildet eine Sollbruchstelle aus.

Bei vorbestimmbarer Krafteinwirkung, welche durch gezielte Ausbildung der Kerbe 310 in Form und Tiefe nach Höhe und Richtung beeinflussbar ist, schert der Flansch 330 an dieser durch die Kerbe 310 ausgebildeten Sollbruchstelle definiert ab.

Figur 3 zeigt hier mit Pfeilen 320 eine Beschleunigungsrichtung von - in einer Normalenrichtung zu dem Flansch 330 - auftreffenden Fahrzeugteilen, wie Cockpit-Teilen.

Treffen diese Teile in Pfeilrichtung 320 auf den Flansch - oder habe Bewegungsanteile in Pfeilrichtung 320 - bricht bzw. schert der Flansch an der durch die Kerbe 310 geschwächten Stelle definiert durch bzw. ab.

Anzumerken ist, dass eine entsprechende Wirkung auch durch definierte Gehäuseunterbrechungen 340, wie unterbrochene Rippen oder Stege (Figur 4), erzielbar ist.

**Zweites Ausführungsbeispiel: definiert geschwächter Auflageflansch eines Kanalstutzens (****Figur 4****)**

Figur 4 zeigt einen Auflageflansch 400 eines Kanalstutzens in Draufsicht auf eine Auflagefläche 430 des Auflageflansches 400.

Der Kanalstutzen bzw. der Auflageflansch weist, wie dargestellt, zwei Luftführungsöffnungen 440, 441 auf, welche durch einen Kragen 431 des Flansches 400, welcher Kragen 431 die Auflagefläche 430 bildet, umrandet wird.

Über die Auflagefläche 430, einer dort aufgelegten und eingepassten Dichtung (vgl. Fig. 7b, 701) kann eine fluiddichte Verbindung mit einem Anschlusskanalstutzen oder einer Düse (nicht dargestellt) hergestellt werden.

Eine solche Dichtung 701 kann beispielsweise zusätzlich mit der Auflagefläche 430 verklebt sein.

Weiter zeigt Figur 4 schematisch dargestellte Rippen 410, welche auf dem Kragen 431 bzw. auf der Auflagefläche 430 verteilt sind, sowie einen die Auflagefläche 430 innen und außen begrenzenden Rand 411, welche beiden, d.h. die Rippen 410 und der Rand 411, jeweils eine vorgegeben Höhe - nach welcher sich dann die die Dicke der Dichtung bemisst - aufweisen. Vorliegend weisen die umlaufenden Ränder 411 eine größere Höhe auf als die Rippen 410, um so einem Verschieben der Dichtung 701 entgegenzuwirken.

Wie dargestellt ragen die Rippen 410 und der Rand 411 aus der Zeichenebene hervor und sind in ihrer, in diesem Fall unterschiedlichen, Höhe nicht sichtbar.

Weiter zeigt Figur 4, dass die Rippen 410 im wesentlichen C-förmig ausgebildet sind, wodurch sich nach einer Seite hin offene Rahmen 412 bilden. Auch sind die Rippen 410 nicht untereinander 413 und auch nicht mit dem Rand 411 bzw. den Rändern 411 verbunden 414, wodurch sich definierte Unterbrechungen 413, 414 der Rippen-/Rand-Struktur auf der Auflagefläche 430 bzw. auf dem Kragen 431 ausbilden.

Durch diese definierten, nach Belastungshöhe und Richtung ausbildbaren Unterbrechungen 413, 414 ist der Kragen 431 an den Unterbrechungsstellen geschwächt und kann dort definierte Sollbruch- oder Verformungsstellen, beispielsweise im Falle einer Belastung des Kragen 431 bei einem Unfall bzw. Crash eines Fahrzeugs, ausbilden (s. Figuren 5a bis d).

Mit Pfeilen 450 und einem Buchstaben E ist ein Schnitt durch den die Rippen-/Randstruktur aufweisenden Kragen 431 bezeichnet. Figur 7b zeigt eine zugehörige Schnittdarstellung, wobei dort die dargestellten Teile - soweit übereinstimmend - entsprechend Figur 4 bezeichnet sind.

Darüber hinaus zeigt Figur 7b die Dichtung 701, welche auf den Rippen 410 aufliegt und von den Rändern 411 des Kragens 431 begrenzt wird.

Als zusätzliches, eine Sollbruchstelle bildendes Strukturelement kann der Kragen 431, wie Figur 7b weiter zeigt, mit einer Kerbe 711 ausgestattet bzw. geschwächt sein.

Wie in Figur 7b dargestellt verläuft die Kerbe 711 entlang des Randes 411 im Zwischenraum zwischen der Rippe 400 und dem Rand 411.

Weitere solche, alternative Ausführungsformen von Sollbruchstellen bildenden Strukturen sind in Figuren 7 bis 9 dargestellt und werden nachfolgend mit Bezug auf diese beschrieben.

**Drittes Ausführungsbeispiel: Definiert geschwächte Auflageflansch eines Kanalstatzens**

In den Figuren 5a bis d ist ein Bruchverhalten, insbesondere ein Abscheren, eines Sollbruchstellen 510 bis 512 aufweisenden Kanalstutzens 500 bzw. eines Auflageflansches des Kanalstutzens 500, wie er beispielsweise nach den obig beschrieben Ausführungsbeispielen ausgeführt sein kann, dargestellt.

Als Sollbruchstellen 510 bis 512 sind bei dem Kanalstutzen 500 eine Kerbe 512 an einer Verbindungsstelle von Kragen 520 zum Rohrabschnitt 521 (vgl. Figur 3) sowie Strukturunterbrechungen 510, 511 in der Rippen-/Wandstruktur des Kragens 520 (vgl. Figur 4) vorgesehen.

Durch diese Sollbruchstellen 510 bis S12 ist der Auflageflansch gezielt konstruktiv derart geschwächt, dass der Kragen 520 wie in den Figuren 5a bis d dargestellt an den Verbindungsstellen abscheren kann. Die Sollbruchstellen sind dabei so bemessen, dass die Abscherung erst bewirkt wird, wenn eine Belastung eine bestimmte Höhe in definierter Richtung überschreitet.

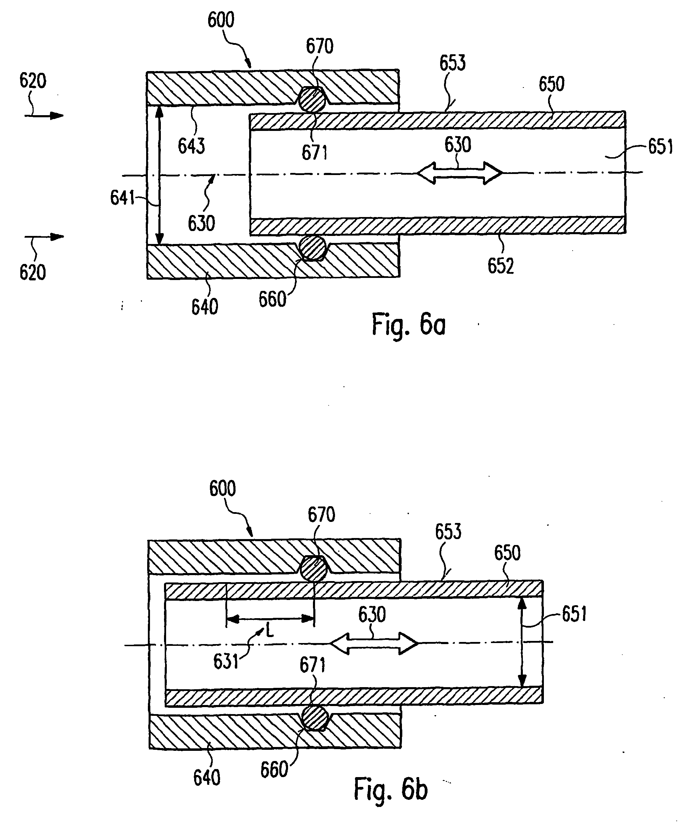

Viertes Ausführungsbeispiel: Verformungsweg durch Längenausgleich zwischen zwei Rohren einer Rohrverbindung (Figuren 6a und b, 600)

Figuren 6a und 6b zeigen eine (fluiddichte) Rohrverbindung 600 mit zwei Rohren 640, 650, wobei das Rohr 640 einen Kanal oder eine Düse und das Rohr 650 einen Luftabgang an einer Kraftfahrzeugklimaanlage ausbildet.

Die Rohrdurchmesser 641 und 651 beider Rohre 640, 650, ein zwischen beiden Rohren 640, 650 liegender Dichtring 670 sowie zumindest die Wandstärken 652 von Rohr 650 sind derart aufeinander abgestimmt, dass die Rohrverbindung wie nachfolgend beschrieben einerseits fluiddicht ist, aber andererseits die beiden Rohre 640, 650 unter einer definierten Belastung in einer Längsrichtung 630 gegeneinander verschiedlich sind. Wie die Figuren 6a und 6b zeigen ist hier das Rohr 640 in das Rohr 650 einschiebbar bzw. in diesem verschiebbar.

An der Innenwand 643 des Rohres 640 ist eine radial umlaufende Nut 660 eingearbeitet, in welche der entsprechend angepasste Dichtring 670 eingelegt ist.

Der Dichtring 670 liegt, wie die Figuren 6a und 6b zeigen, mit seinem Innendurchmesser 671 an der Oberfläche 653 des Rohres 650 an, wodurch bei entsprechender Bemessung der Abmessungen und Durchmesser eine fluiddichte Verbindung zwischen den beiden Rohren 640, 650 geschaffen wird.

Figur 6a zeigt die Rohrverbindung 600 der zwei Rohre 640, 650 vor einer Krafteinwirkung, beispielsweise durch einen Auffahrunfall eines diese Rohrverbindung 600 aufweisenden Kraftfahrzeugs, auf das Rohr 640, d.h. in einem Normalzustand.

Mit Pfeilen 620 in Figur 6a ist eine Beschleunigungsrichtung von auf die Rohrverbindung 600 auftreffenden Fahrzeug- bzw. Cockpitteilen gekennzeichnet, wie sie bei einem solchen Auffahrunfall bzw. bei einer solchen Krafteinwirkung auftreten kann.

Die dargestellte Beschleunigungsrichtung 620 verläuft in Längsrichtung 630 des Rohre 640, 650 bzw. parallel dazu. Für anders gerichtete Krafteinwirkungen und Beschleunigungsrichtungen sind hier die entsprechenden Komponenten in der Längsrichtung 631 zu verstehen.

Unter der Krafteinwirkung verschieben sich, wie Figur 6b zeigt, die beiden Rohre 640, 650 gegeneinander in der Längsrichtung 630. Dargestellt in Figur 6b ist der Fall, dass sich das Rohr 650 gegen das Rohr 640 verschiebt, was darauf zurückgeführt werden kann, dass die Aufnahmenut 660 des Dichtrings 670 in das Rohr 640 eingearbeitet ist.

Mit L ist in Figur 6b beispielhaft ein bestimmter Bewegungsweg 631 (Längenausgleich) gekennzeichnet, um welchen sich das Rohr 650 unter einer bestimmten Krafteinwirkung weiter in das Rohr 640 einschiebt.

Durch die relative Verschiebung der Rohre 640, 650 gegeneinander um den Bewegungsweg L 631 (Längenausgleich) wird der Verformungsweg, über welchen die Bewegungsenergie von auftreffenden Cockpit-Teilen abgebaut wird, verlängert.

Die Bewegungsenergie wird dadurch definiert, weniger ruckartig abgebaut, wodurch sich eine Verletzungsgefahr von Fahrzeuginsassen verringert.

Die Abmessungen der die Rohrverbindung 600 bildenden Komponenten sind wie bereits beschrieben derart bemessen, dass die Rohrverbindung 600 einerseits fluiddicht ist, andererseits dieser Längenausgleich 631 zwischen den beiden Rohren 640, 650 bewirkt werden kann. Weiter sind sie so bemessen, dass der Längenausgleich 631 erst bewirkt wird, wenn die Belastung auf die Rohrverbindung 600 in Richtung und Größe bestimmte Grenzen überschreitet. Dadurch wird ein ungewollte und unkontrollierter Längenausgleich 631 vermieden, beispielsweise durch im normalen Fahrzeugbetrieb auftretenden Stöße und Krafteinwirkungen.

Fünftes bis achtes Ausführungsbeispiel: Alternative Sollbruchstellen bildende Strukturen an einer auflagefläche eines Anschlussflansches (Figuren 7 bis 9)

Die nachfolgenden, alternativen sollbruchstellen bildenden Strukturen nehmen bezug auf den in Figur 4 dargestellten und als viertes Ausführungsbeispiel beschriebenen Flansch 400 bzw. Kragen 431. Übereinstimmende Teile sind entsprechend gleich bezeichnet.

Alternativ zu der Rippen-/Rand-Struktur auf der Auflagefläche 430 des Kragens 431 nach dem vierten Ausführungsbeispiel kann auch eine Schlitz-/Rand-Struktur, wie sie Figur 7a in einem entsprechenden Schnitt E (vgl. Schnitt B, 450 bei Figur 4 und Figur 7b) zeit, ausgebildet sein.

In diesem Fall sind anstelle der C-förmigen Rippen 410 entsprechend geformte, C-förmige Schlitze 710 in den Kragen 431 eingearbeitet. Die Dichtung 701 liegt in diesem Fall unmittelbar auf der Auflagefläche 430 auf.

Figuren 8a und b zeigen eine weitere alternative, eine Sollbruchstelle bildende Rippen-/Randstruktur 800 mit (umlaufender) Kerbe 711.

Figur 8a zeigt dabei einen Ausschnitt des, Kragens 431 in Draufsicht. Figur 8b ist eine Schnittdarstellung F des Kragens entlang des mit den Bezugszeichen 850 gekennzeichneten Schnittverlaufs.

Bei dieser Rippen-/Randstruktur 800 sind die Rippen 810 x-förmig ausgebildet. Auch diese weisen schwächende Abstände 414 zu den Rändern 411 des Kragens 431 auf. Entlang eines Randes 411 und im Zwischenraum zwischen der Rippe 810 und dem Rand 411 ist eine ebenfalls schwächende, umlaufende Kerbe 711 eingearbeitet.

Die Dichtung 701 liegt in diesem Fall, wie Figur 8b zeigt, auf den Rippen 810, welche in ihrer Höhe niedriger als die Ränder 411 ausgebildet sind, auf und wird durch die Ränder 411 gegen Verschieben begrenzt.

Figur 9 zeigt schematisch eine weitere alternative Schlitz-/Rand-Struktur 900 des Flansches 400 bzw. des Kragens 431.

Hier sind, wie Figur 9 an einem Ausschnitt des Kragens 431 zeigt, C-förmige Schlitze 910 wie dargestellt angeordnet. Zwischen jeweils zwei Schlitzen 910 ist eine Kerbe 911, welche die Schlitze 910 wie gezeigt verbindet, in die Auflagefläche 430 eingearbeitet. Die Schlitze 910 weisen auch hier schwächende Randabstände 414 auf.

## Patentansprüche

1. Belüftungsvorrichtung, insbesondere für Kraftfahrzeuge, wobei
die Belüftungsvorrichtung an einer vorgebbaren Stelle der Belüftungsvorrichtung einen Bereich aufweist, welcher unter einer vorgegebenen Belastung nach einer durch eine Struktur der Belüftungsvorrichtung in dem Bereich vorbestimmten Weise seine Gestalt ändert, wobei bei der Gestaltänderung eine durch die Belastung bewirkte Umformungsenergie abgebaut wird,
**dadurch gekennzeichnet, dass**
die vorgebbare Stelle ein Kanalstutzen (300; 500) mit einem Rohrabschnitt (305) und einem Auflagenflansch (330, 400) oder Kragen (330, 431, 520) ist, wobei der Auflagenflansch (330, 400) oder Kragen (330,431, 520) bei der Belastung in dem Bereich von dem Rohrabschnitt (305) abschert.

2. Belüftungsvorrichtung nach mindestens einem der voranstehenden Ansprüche, wobei
die Belüftungsvorrichtung mindestens ein Gehäuse (100) mit einer Gehäusewand (200) und mit einem Lüftungskanal (160 - 163), welcher an einer Strömungsöffnung des Gehäuses (100) angeordnet ist, aufweist.

3. Belüftungsvorrichtung nach mindestens einem der voranstehenden Ansprüche, wobei
die Belüftungsvorrichtung ein Anschlusselement (180, 181), insbesondere einen Anschlusskanalstutzen oder eine Düse, aufweist, welches insbesondere mit einem Lüftungskanal (160 - 163) eines Gehäuses (100) verbunden ist.

4. Belüftungsvorrichtung nach mindestens einem der voranstehenden Ansprüche, wobei
die vorgebbare Stelle des weiteren ein Gehäuse (100) der Belüftungsvorrichtung oder ein Anschlusselement (180, 181) der Belüftungsvorrichtung oder ein Verbindungsbereich zwischen dem Gehäuse (100) und dem Anschlusselement (180, 181) umfasst.

5. Belüftungsvorrichtung nach mindestens einem der voranstehenden Ansprüche, wobei
die vorgebbare Stelle des weiteren die Gehäusewand (200), insbesondere einen Verbindungsbereich zwischen einem Lüftungskanal (160 - 163) eines Gehäuses (100) der Belüftungsvorrichtung und einem Anschlusselement (180, 181) der Belüftungsvorrichtung umfasst.

6. Belüftungsvorrichtung nach mindestens einem der voranstehenden Ansprüche, wobei
der Bereich ein Punkt oder eine Linie oder eine Fläche oder ein Körper, insbesondere ein annähernd zylinderförmiger Körper ist

7. Belüftungsvorrichtung nach mindestens einem der voranstehenden Ansprüche, wobei
die Struktur eine eine Sollbruchstelle bildende Schwächung ist.

8. Belüftungsvorrichtung nach Anspruch 7, wobei
die Schwächung punktförmig oder linienförmig oder flächig ausgestaltet ist.

9. Belüftungsvorrichtung nach mindestens einem der voranstehenden Ansprüche, wobei
die Struktur eine eine Sollbruchstelle bildende Kerbe (310) ist, insbesondere ausgebildet als linienförmige und/oder umlaufende Kerbe (310) oder als offener oder geschlossener Polygonzug.

10. Belüftungsvorrichtung nach mindestens einem der voranstehenden Ansprüche, wobei
die Struktur eine eine Sollbruchstelle bildende Wandverdünnung ist.

11. Belüftungsvorrichtung nach mindestens einem der voranstehenden Ansprüche, wobei
die Struktur eine eine Sollbruchstelle (340) ist, insbesondere eine Unterbrechungen aufweisende Rippenstruktur mit Rippen (410), insbesondere mit C- oder X- oder T-förmige Rippen (410), ist.

12. Belüftungsvorrichtung, insbesondere für Kraftfahrzeuge, wobei
die Belüftungsvorrichtung an einer vorgebbaren Stelle der Belüftungsvorrichtung einen Bereich aufweist, welcher unter einer vorgegebenen Belastung nach einer durch eine Struktur der Belüftungsvorrichtung in dem Bereich vorbestimmten Weise seine Gestalt ändert, wobei bei der Gestaltänderung eine durch die Belastung bewirkte Umformungsenergie abgebaut wird,
**dadurch gekennzeichnet, dass**
die Struktur eine eine Relativbewegung, insbesondere eine Längsverschiebung, ermöglichende Kopplung ist, insbesondere zwischen einem Lüftungskanal (160 - 163) der Belüftungsvorrichtung und einem Anschlusselement (180, 181) der Belüftungsvorrichtung.

13. Belüftungsvorrichtung nach Anspruch 12, wobei
die Kopplung zwischen dem Lüftungskanal (160 - 163) und dem Anschlusselement (180, 181) unter Verwendung eines in einer an einer Innenwand des Anschlusselements (180, 181) oder an einer Außenwand des Lüftungskanals (160 - 163) umlaufenden Nut eingelegten Ringes bewirkt wird.

14. Belüftungsvorrichtung nach Anspruch 12 oder 13, wobei
bei der Relativbewegung ein Längenausgleich derart erfolgt, dass der Lüftungskanal (160 - 163) in Längsrichtung teleskopartig gegen das Anschlusselement (180, 181) verschoben wird.

15. Belüftungsvorrichtung nach mindestens einem der voranstehenden Ansprüche, wobei
die vorbestimmte Weise der Gestaltänderung ein Bruch, eine Verformung, ein Abscheren, eine Verschiebung und/oder eine Relativbewegung ist.

16. Belüftungsvorrichtung nach mindestens einem der voranstehenden Ansprüche, wobei
die Struktur der Belüftungsvorrichtung in dem Bereich derart ausgebildet ist, dass die Umformungsenergie definiert, insbesondere über einen längeren Verformungsweg, abgebaut wird.

17. Belüftungsvorrichtung nach mindestens einem der voranstehenden Ansprüche, wobei
die vorgegebene Belastung nach Betrag und/oder Richtung vorgebbar ist.

18. Belüftungsvorrichtung nach mindestens einem der voranstehenden Ansprüche, wobei
die vorgegebene Belastung durch auf die Belüftungsvorrichtung auftreffende Elemente, insbesondere Cockpit-Teile, bewirkt wird.

19. Belüftungsvorrichtung nach mindestens einem der voranstehenden Ansprüche,
**dadurch gekennzeichnet, dass**
das Auftreffen der Elemente durch einen Crash bewirkt wird.

20. Belüftungsvorrichtung nach mindestens einem der voranstehenden Ansprüche, wobei
die Belüftungsvorrichtung eine Lüftungsanlage, eine Heizungsanlage oder eine Klimaanlage in einem Kraftfahrzeug ist.

21. Verfahren zur Herstellung einer Belüftungsvorrichtung, insbesondere für Kraftfahrzeuge, wobei
die Belüftungsvorrichtung an einer vorgebbaren Stelle der Belüftungsvorrichtung derart bearbeitet wird, dass an der vorgebbaren Stelle ein Bereich gebildet wird, welcher unter einer vorgegebenen Belastung nach einer durch eine Struktur der Belüftungsvorrichtung in dem Bereich vorbestimmten Weise seine Gestalt ändert,
bei der Gestaltänderung eine durch die Belastung bewirkte Umformungsenergie abgebaut wird,
**dadurch gekennzeichnet, dass**
die vorgebbare Stelle ein Kanalstutzen (300; 500) mit einem Rohrabschnitt (305) und einem Auflagenflansch (330, 400) oder Kragen (330, 431, 520) ist, wobei der Auflagenflansch (330, 400) oder Kragen (330, 431, 520) bei der Belastung in dem Bereich von dem Rohrabschnitt (305) abschert.

## Claims

1. A ventilation device, in particular for motor vehicles, whereas the ventilation device having, at a determinable point of the ventilation device, an area that, when subjected to a specific load, changes its shape in a manner predetermined by a structure of the ventilation device in said area,
whereas a deformation energy caused by the load being absorbed during the change of shape,
**characterised in that**
the determinable point is a duct collar (300; 500) with a tube segment (305) and a flange (330, 400) or collar (330, 431, 520), whereas the flange (330, 400) or collar (330, 431, 520) shears off the tube segment (305) in said area while loaded.

2. The ventilation device according to at least one of the previous claims, **characterised in that** the ventilation device has at least one housing (100) having a housing wall (200) and having a ventilation duct (160 - 163), that is situated at a flow opening of the housing (100).

3. The ventilation device according to at least one of the previous claims, **characterised in that** the ventilation device has a connecting element (180, 181), in particular a connecting duct collar or a nozzle, that is connected in particular to a ventilation duct (160 - 163) of the housing (100).

4. The ventilation device according to at least one of the previous claims, **characterised in that** the determinable point furthermore includes a housing (100) of the ventilation device or a connecting element (180, 181) of the ventilation device or a connecting area between the housing (100) and the connecting element (180, 181).

5. The ventilation device according to at least one of the previous claims, **characterised in that** the determinable point furthermore includes the housing wall (200), in particular a connecting area between a ventilation duct (160 - 163) of a housing (100) of the ventilation device and a connecting element (180, 181) of the Ventilation device.

6. The ventilation device according to at least one of the previous claims, **characterised in that** the area is a point or a line or a surface or a body, in particular an approximately cylindrical body

7. The ventilation device according to at least one of the previous claims, **characterised in that** the structure is a weakened area, forming an intended break point.

8. The ventilation device according to claim 7, **characterised in that** the weakened area is fashioned in the shape of a point or a in the shape of a line or as a surface.

9. The ventilation device according to at least one of the previous claims, **characterised in that** the structure is a groove (310), forming an intended break point, fashioned in particular as a line-shaped and/or circumferential groove (310) or as an open or closed polygonal line.

10. The ventilation device according to at least one of the previous claims, **characterised in that** the structure is a wall thinning, forming an intended break point.

11. The ventilation device according to at least one of the previous claims, **characterised in that** the structure is an intended break point (340), in particular a rib structure comprising interruptions, having ribs (410), in particular C-shaped or X-shaped or T-shaped ribs (410).

12. A ventilation device, in particular for motor vehicles, whereas the ventilation device having, at a determinable point of the ventilation device, an area that, when subjected to a specific load, changes its shape in a manner predetermined by a structure of the ventilation device in said area, whereas a deformation energy caused by the load being absorbed during the change of shape,
**characterised in that**
the structure is a coupling that enables relative movement, in particular a longitudinal displacement, in particular between a ventilation duct (160 - 163) of the ventilation device and a connecting element (180, 181) of the ventilation device.

13. The ventilation device according to claim 12, **characterised in that** the coupling between the ventilation duct (160 - 163) and the connecting element (180, 181) is effected using a ring placed into a groove that runs circumferentially on an inner wall of the connecting element (180, 181) or on an outer wall of the ventilation duct (160 - 163).

14. The ventilation device according to claim 12 or 13, **characterised in that** during the relative movement a length compensation takes place in such a way that the ventilation duct (160 - 163) is pushed against the connecting element (180, 181) in the longitudinal direction in a telescopic manner.

15. The ventilation device according to at least one of the previous claims, **characterised in that** the predetermined manner, in which the change of shape takes place, is a breaking, a deformation, a shearing off, a displacement and/or a relative movement.

16. The ventilation device according to at least one of the previous claims, **characterised in that** the structure of the ventilation device in the area is fashioned such that the deformation energy is a absorbed in a defined manner, in particular via a longer deformation path.

17. The ventilation device according to at least one of the previous claims, **characterised in that** the specified load is able to be specified with respect to its magnitude and/or direction.

18. The ventilation device according to at least one of the previous claims, **characterised in that** the specified load is caused by elements, in particular cockpit parts, impacting on the ventilation device.

19. The ventilation device according to at least one of the previous claims, **characterised in that** the impacting of the elements is caused by a crash.

20. The ventilation device according to at least one of the previous claims, **characterised in that** the ventilation device is a ventilation system, a heating system or an air conditioning system in a motor vehicle.

21. A Method for manufacturing a ventilation device, in particular for motor vehicles, comprising:
processing the ventilation device at a determinable point of the ventilation device such that at a determinable point an area is formed, that, when subjected to a specified load, changes its shape in a manner predetermined by a structure of the ventilation device in said area, and
causing a deformation energy by the load being absorbed during the change of shape,
**characterised in that**
the determinable point is a duct collar (300; 500) with a tube segment (305) and a flange (330, 400) or collar (330, 431, 520), whereas the flange (330, 400) or collar (330, 431, 520) shears off the tube segment (305) in said area while loaded.

## Revendications

1. Dispositif d'aération, notamment pour véhicules automobiles, dans lequel
le dispositif d'aération présente dans un emplacement prédéterminé du dispositif d'aération, une zone qui, sous une sollicitation ou charge prédéterminée, modifie sa configuration selon une manière prédéterminée par une structure du dispositif d'aération dans ladite zone, une énergie de déformation produite par la sollicitation étant dégradée lors de la modification de configuration,
**caractérisé en ce que**
ledit emplacement prédéterminé est constitué par un embout de canal (300 ; 500) avec un tronçon tubulaire (305) et un flasque d'appui (330, 400) ou un collet (330, 431, 520), le flasque d'appui (330, 400) ou collet (330, 431, 520) se sectionnant par cisaillement dans la zone du tronçon tubulaire (305) lors de la sollicitation.

2. Dispositif d'aération selon l'une au moins des revendications précédentes, dans lequel le dispositif d'aération présente au moins un carter (100) comportant une paroi de carter (200) et un canal d'aération (160 - 163) qui est agencé au niveau d'une ouverture d'écoulement du carter (100).

3. Dispositif d'aération selon l'une au moins des revendications précédentes, dans lequel le dispositif d'aération présente un élément de raccordement (180, 181), notamment un embout de canal de raccordement ou une buse, qui est en particulier relié à un canal d'aération (160 - 163) d'un carter (100).

4. Dispositif d'aération selon l'une au moins des revendications précédentes, dans lequel l'emplacement prédéterminé englobe en outre un carter (100) du dispositif d'aération ou un élément de raccordement (180, 181) du dispositif d'aération ou bien une zone de liaison entre le carter (100) et l'élément de raccordement (180, 181).

5. Dispositif d'aération selon l'une au moins des revendications précédentes, dans lequel l'emplacement prédéterminé englobe en outre la paroi de carter (200), notamment une zone de liaison entre un canal d'aération (160 - 163) d'un carter (100) du dispositif d'aération et un élément de raccordement (180, 181) du dispositif d'aération.

6. Dispositif d'aération selon l'une au moins des revendications précédentes, dans lequel ladite zone est un point ou une ligne ou une surface ou bien un corps, notamment un corps approximativement de forme cylindrique.

7. Dispositif d'aération selon l'une au moins des revendications précédentes, dans lequel ladite structure est un affaiblissement formant une zone de rupture programmée.

8. Dispositif d'aération selon la revendication 7, dans lequel l'affaiblissement est d'une configuration en forme de point ou en forme de ligne ou en forme de surface.

9. Dispositif d'aération selon l'une au moins des revendications précédentes, dans lequel ladite structure est une entaille (310) formant une zone de rupture programmée, notamment conçue sous la forme d'une entaille (310) en forme de ligne et/ou périphérique, ou bien sous la forme d'un tracé polygonal ouvert ou fermé.

10. Dispositif d'aération selon l'une au moins des revendications précédentes, dans lequel ladite structure est un amincissement de paroi formant une zone de rupture programmée.

11. Dispositif d'aération selon l'une au moins des revendications précédentes, dans lequel ladite structure est une structure formant une zone de rupture programmée, en particulier une structure nervurée présentant des interruptions et comportant des nervures (410), notamment des nervures (410) en forme de C, en forme de X ou en forme de T.

12. Dispositif d'aération, notamment pour véhicules automobiles, dans lequel
le dispositif d'aération présente dans un emplacement prédéterminé du dispositif d'aération, une zone qui, sous une sollicitation ou charge prédéterminée, modifie sa configuration selon une manière prédéterminée par une structure du dispositif d'aération dans ladite zone, une énergie de déformation produite par la sollicitation étant dégradée lors de la modification de configuration,
**caractérisé en ce que**
ladite structure est constituée par un couplage permettant un mouvement relatif, notamment un coulissement longitudinal, en particulier entre un canal d'aération (160 - 163) du dispositif d'aération et un élément de raccordement (180, 181) du dispositif d'aération.

13. Dispositif d'aération selon la revendication 12, dans lequel le couplage entre le canal d'aération (160 - 163) et l'élément de raccordement (180, 181) est produit par l'utilisation d'un anneau placé dans une rainure périphérique dans une paroi intérieure de l'élément de raccordement (180, 181) ou dans une paroi extérieure du canal d'aération (160 - 163).

14. Dispositif d'aération selon la revendication 12 ou 13, dans lequel, lors du mouvement relatif, s'effectue une compensation de longueur de la manière suivante, à savoir que le canal d'aération (160 - 163) est déplacé de manière télescopique dans la direction longitudinale par rapport à l'élément de raccordement (180, 181).

15. Dispositif d'aération selon l'une au moins des revendications précédentes, dans lequel la manière prédéterminée de la modification de configuration est une rupture, une déformation, un sectionnement par cisaillement, un coulissement et/ou un mouvement relatif.

16. Dispositif d'aération selon l'une au moins des revendications précédentes, dans lequel la structure du dispositif d'aération est conçue dans ladite zone de façon telle, que l'énergie de déformation soit dégradée de manière définie, en particulier le long d'un déplacement de déformation de longueur plus importante.

17. Dispositif d'aération selon l'une au moins des revendications précédentes, dans lequel la sollicitation prédéterminée peut être prédéfinie quant à sa valeur et/ou à sa direction.

18. Dispositif d'aération selon l'une au moins des revendications précédentes, dans lequel la sollicitation prédéterminée est produite par l'impact d'éléments sur le dispositif d'aération, notamment par l'impact de parties de cockpit ou d'habitacle.

19. Dispositif d'aération selon l'une au moins des revendications précédentes, dans lequel l'impact des éléments est produit par un crash.

20. Dispositif d'aération selon l'une au moins des revendications précédentes, dans lequel le dispositif d'aération est une installation de ventilation, une installation de chauffage ou une installation de climatisation dans un véhicule automobile.

21. Procédé de fabrication d'un dispositif d'aération, notamment pour véhicules automobiles, dans lequel
le dispositif d'aération est usiné au niveau d'un emplacement prédéterminé du dispositif d'aération, de manière à présenter à cet emplacement prédéterminé une zone qui, sous une sollicitation ou charge prédéterminée, modifie sa configuration selon une manière prédéterminée par une structure du dispositif d'aération dans ladite zone,
une énergie de déformation produite par la sollicitation étant dégradée lors de la modification de configuration,
**caractérisé en ce que**
ledit emplacement prédéterminé est constitué par un embout de canal (300 ; 500) avec un tronçon tubulaire (305) et un flasque d'appui (330, 400) ou un collet (330, 431, 520), le flasque d'appui (330, 400) ou collet (330, 431, 520) se sectionnant par cisaillement dans la zone du tronçon tubulaire (305) lors de la sollicitation.
